# EUROPEAN PATENT SPECIFICATION

(11) **EP 3 233 542 B1**
(45) Date of publication and mention of the grant of the patent: **17.06.2020**
(21) Application number: 14908522.7
(22) Date of filing: 19.12.2014
(51) Int. Cl.: B60G 11/113, F16F 1/26, B60G 11/04, F16F 1/18

(54) **VEHICLE SUSPENSION COMPRISING A LEAF SPRING ASSEMBLY**
FAHRZEUGAUFHÄNGUNG MIT EINER BLATTFEDERANORDNUNG
SUSPENSION DE VÉHICULE COMPRENANT UN ENSEMBLE RESSORT À LAMES

(43) Date of publication of application: 25.10.2017
(73) Proprietor: Volvo Truck Corporation, 405 08 Göteborg (SE)
(72) Inventor: PREIJERT, Stefan, S-415 07 Göteborg (SE)
(74) Representative: Kransell & Wennborg KB
(86) International application number: PCT/SE2014/000155
(87) International publication number: WO 2016/099343

(56) References cited:
- GB-A- 1 244 843
- GB-A- 2 128 714
- US-A- 49 786
- US-A1- 2011 057 409
- US-A1- 2014 353 936
- US-B1- 6 273 441

## Description

### FIELD OF THE INVENTION:

The present invention relates to a vehicle suspension arrangement comprising at least two leaf springs which are arranged, during use in a vehicle, with a longitudinal extension generally coinciding with the longitudinal extension of said vehicle; said suspension arrangement comprising a spring clamping unit connecting said leaf springs to an axle in said vehicle; and wherein each of said leaf springs comprises end sections which are configured to be fastened in a vehicle chassis.

### BACKGROUND ART:

In the field of heavy commercial vehicles, there exist several solutions which relate to the suspension of vehicles axles in relation to a frame of the vehicle in question. One known solution is a leaf spring, which is commonly used for the suspension of wheeled vehicles. Other solutions include for example torsion springs and air suspension devices.

In particular, in the field of heavy commercial vehicles, it is common to use leaf springs for dampening the movements of each axle in relation to the vehicle frame during operation of the vehicle. A leaf spring is based on a generally arc-shaped length of steel having a rectangular cross-section. The centre point of the arc which forms the spring defines a position where the leaf spring crosses the axle in question. Furthermore, the leaf spring is normally attached at each of its ends to a vehicle chassis and also to the axle, at said centre point. The ends of the spring are normally attached to the chassis via a sliding attachment or a shackle in order to absorb longitudinal movements in the leaf spring due to elongation of the leaf spring when it is compressed during use.

It is known to design a leaf spring arrangement with a number of separate spring leaves. Such multi-leaf spring arrangements are widely used for heavy vehicles such as trucks, buses and similar vehicles. Also, such spring arrangements are beneficial since they have a robust design and may absorb longitudinal and lateral forces from the vehicle wheels in an efficient manner.

On the other hand, there are some disadvantages involved with leaf spring arrangements, such as a relatively high weight, a high friction, a wind-up tendency during braking and a stiffness which varies with the lateral forces acting on the spring.

Also, a leaf spring can be tapered in a direction from the point where it is attached to the axle and towards its ends. The cost of manufacturing such a tapered steel leaf spring is mainly dependent on material cost, due to the fact that the leaf spring steel grade continuously improves for higher strength in order to meet the requirements of weight reduction and better comfort level.

A particular type of leaf spring is the so-called parabolic leaf spring. This spring arrangement consists of a number of leaf springs which are of generally equal length and arranged to form a parabolic curve. The spring arrangement is configured so that there is only contact between the leaf springs at their end sections and at the centre point where the leaf springs are clamped to the axle. Spacer elements are suitably used in order to prevent contact between the springs at other points than the centre point. Also, the leaf springs are free to slip longitudinally relative to each other when the spring is deflected.

Regarding known technology, it can be noted that the patent document US 49786 discloses a vehicle suspension comprising a leaf spring arrangement with two leaves arranged in a parallel manner and vertically separated. Furthermore, the leaves are mounted in a manner so that they are connected at their end points.

According to further known technology, US 2011/057409 describes a suspension assembly for a vehicle which has at least two leaf spring assemblies providing at least two load paths. The leaf springs are vertically separated and mounted to a shackle assembly which is mounted to the chassis. The shackle assembly has at least two shackles and has a load transfer assembly. The leaf springs also attach to a spring hanger opposite the shackle assembly.

Although there exist previously known parabolic leaf spring arrangements, there is still a general need to reduce the total weight of a complete spring assembly, and consequently also its cost, without affecting its performance in a negative manner. There are also high requirements for an improved stiffness and brake wind-up behaviour and a high level of comfort.

### SUMMARY OF THE INVENTION:

It is an object of the invention to provide an improved vehicle suspension arrangement which in particular presents advantages related to weight reduction, stiffness, comfort and brake wind-up behaviour.

In accordance the invention, this object is obtained by means of a vehicle suspension arrangement comprising a leaf spring assembly with at least two leaf springs which are arranged, during use in a vehicle, with a longitudinal extension generally coinciding with the longitudinal extension of said vehicle; said suspension arrangement comprising a spring clamping unit connecting said leaf springs to an axle in said vehicle; and wherein each of said leaf springs comprises end sections which are configured to be fastened in a vehicle chassis. Furthermore, the spring clamping unit comprises a spacer component which is configured for separating said leaf springs in a vertical or horizontal direction.

By means of the invention, certain advantages are obtained. Firstly, it can be mentioned that the invention leads to a reduced weight as compared with known arrangements, since it can be configured with two or more leaf springs with reduced leaf width and mounted apart from each other as defined above in the same spring package. In other words, the invention uses the leaf spring material more effectively than known devices, which leads to a weight reduction. According to an embodiment, the weight reduction by means of the invention is approximately 40%.

Also, the arrangement according to the invention has an increased stiffness, as compared with known arrangements, while still maintaining enough lateral forces due to the lateral distance between the outer side of the leafs in the leaf spring assembly. In particular, the arrangement according to the invention has an improved vertical stiffness, torsional stiffness and wind-up stiffness during braking.

The fact that the roll stiffness is improved also means that there is less need for a stabilizer bar in a suspension arrangement. This is also due to the fact that the leaf spring assembly has its end sections attached to the vehicle chassis and also a midsection being clamped to the vehicle axle.

According to an aspect, the spacer component is constituted by a generally homogenuous material through which the leaf springs extend, whereby the spacer component separate said leaf springs.

Also, according to an aspect, each leaf spring comprises a rear spring eye and a front spring eye for fastening said leaf spring in said chassis, whereby the rear spring eyes are fastened in a common point and the front spring eyes are fastened in a further common point. This contributes to an improved spring stiffness and weight reduction.

According to a further aspect, the leaf spring assembly comprises at least one upper leaf spring and at least one lower leaf spring, said upper and lower leaf springs being mounted vertically spaced apart, wherein said upper leaf spring is arranged in a reverse manner, as regarded with reference to a horizontal plane, with respect to said lower leaf spring.

The fact that the upper leaf spring is arranged in a reverse manner as compared with the lower leaf spring, means that the wind-up stiffness (i.e. brake torque stiffness) of the suspension arrangement will be increased. This is due to the fact that the leaf springs will act together as brake force reaction rods for increasing said wind-up stiffness.

According to a further aspect, the leaf spring comprises three leaf springs of which two leaf springs are arranged horizontally spaced apart and wherein the third leaf spring is arranged vertically spaced apart from the two remaining leaf springs. The third leaf spring is furthermore arranged in a reverse manner, as regarded with reference to a horizontal plane, with respect to the remaining leaf springs.

Furthermore, the leaf springs can be arranged so as to extend along a top side of said axle. According to a further aspect, at least one leaf spring extends across a top side of said axle and at least one leaf spring extend underneath a bottom side of said axle.

The invention is particularly adapted for being used in heavy commercial vehicles but can be used in generally any vehicle in which there is a need for dampening movements of an axle in relation to a vehicle frame.

### BRIEF DESCRIPTION OF DRAWINGS:

The invention will now be described with reference to an embodiment and with reference to the appended drawings, wherein:
Fig. 1 shows a side view of a vehicle in which the invention can be used;
Fig. 2 shows a perspective view of a vehicle suspension arrangement according to an embodiment;
Fig. 3 is a cross-sectional view of the arrangement according to an embodiment;
Figs. 4a and 4b are perspective views of a leaf spring assembly according to an embodiment; and
Fig. 5 is a further cross-sectional view of a second embodiment.

### PREFERRED EMBODIMENTS:

Different aspects of the present disclosure will be described more fully hereinafter with reference to the accompanying drawings. The arrangement disclosed below can, however, be realized in many different forms and should not be construed as being limited to the aspects set forth herein.

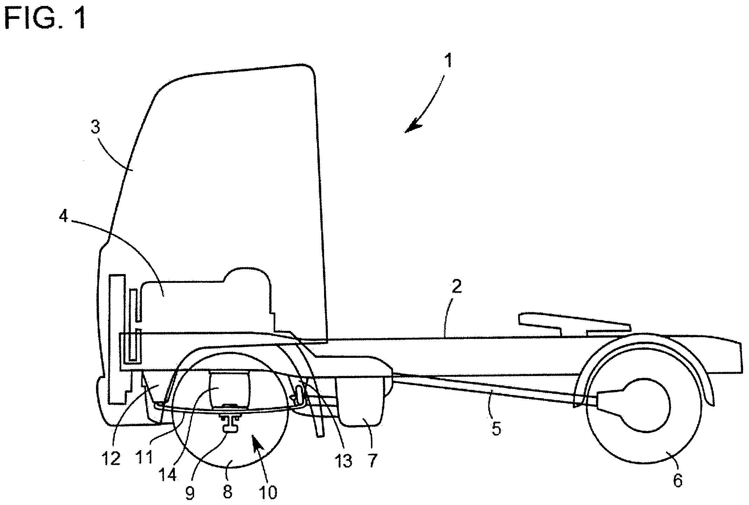

With reference initially to Fig. 1, there is shown a side view of a commercial vehicle 1 in the form of a tractor unit. The vehicle 1 comprises a chassis 2 and a driver's cab 3 mounted on the chassis 2. Underneath the driver's cab 3 is an internal combustion engine 4 which drives a pair of drive wheels 6 by way of a drive train 5 which comprises a clutch and a transmission (not shown).

The internal combustion engine 4 is associated with an exhaust gas system 7 which is arranged for discharging exhaust gas into the atmosphere. The driver's cab 3 is also supported by a pair of steerable front wheels 8. The wheels 8 are mounted on a front axle 9 which is attached to a vehicle suspension arrangement 10. Furthermore, the suspension arrangement 10 comprises two leaf spring assemblies, of which only one leaf spring assembly 11 is visible in Fig. 1. The leaf spring assembly 11 is supported by a front spring attachment 12 and a rear spring attachment 13 so as to be connected to the frame 2. As shown in Fig. 1, the leaf spring assembly 11 is also connected to the frame 2 by an air spring or bellows 14.

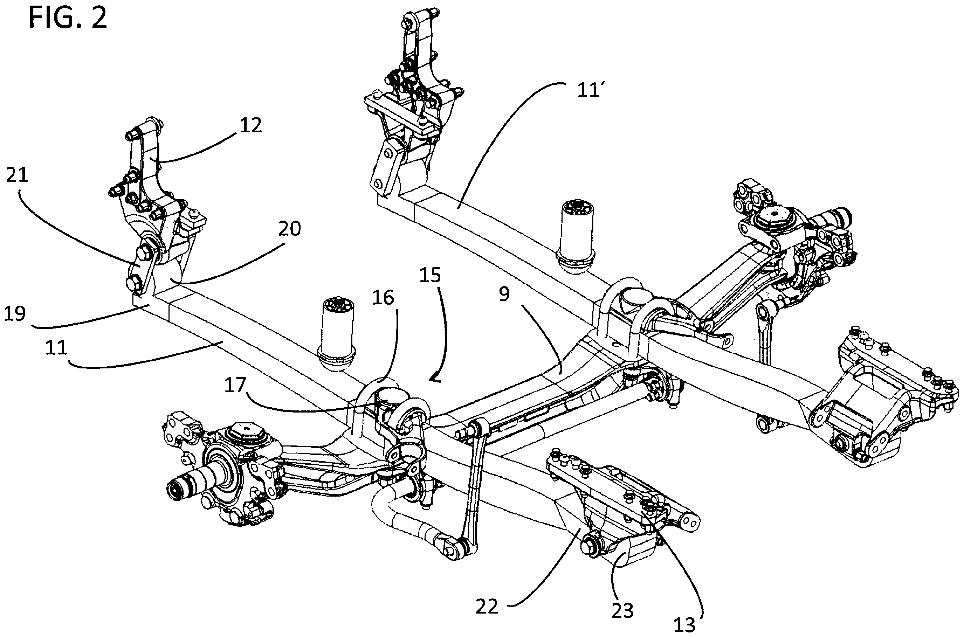

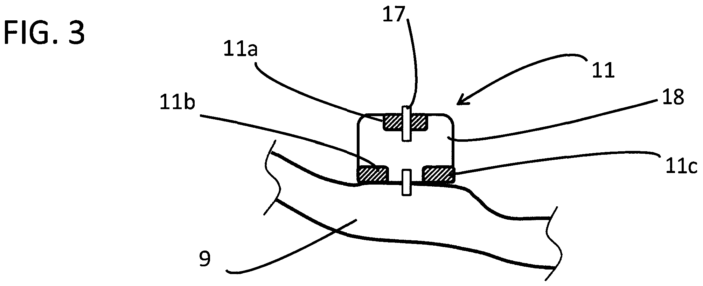

The suspension arrangement 10 will now described in greater detail with reference to Fig. 2 together with Fig. 3. Initially, it should be noted that Fig. 2 is a perspective view showing a first and a second leaf spring assembly 11, 11', of which the first leaf spring assembly 11 corresponds to that shown in Fig. 1. The following description of the first leaf spring assembly 11 applies to the second leaf spring assembly 11' too.

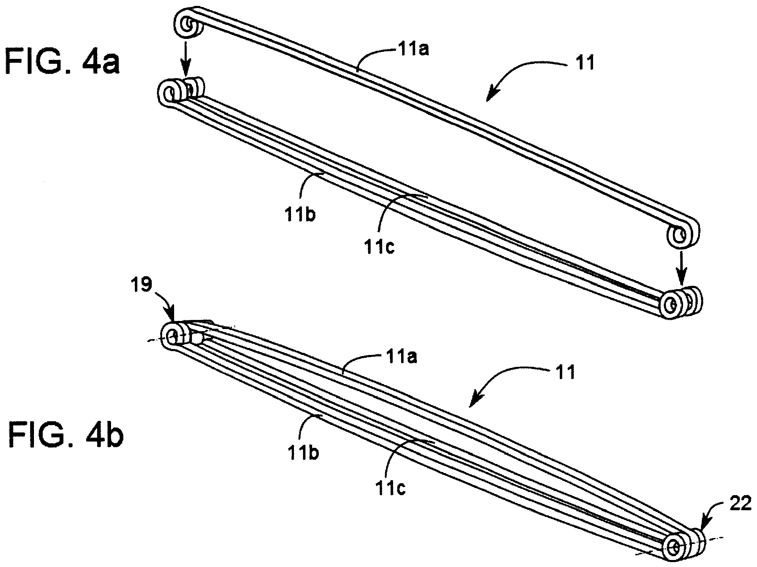

According to an embodiment, the leaf spring assembly 11 is formed by three parabolic leaf springs which extend generally parallel to each other, along the longitudinal direction of the vehicle, and which also extend across the front axle 9. It should be noted that Fig. 1 shows the leaf spring assembly 11 as a single package, although it is composed of three leaf springs, as will be described in greater detail below with reference to Figs. 3, 4a and 4b.

As indicated in Fig. 2, the leaf spring assembly 11 is clamped to the front axle 9 along a section 15 of the leaf spring assembly 11 which extends above the front axle 9. More precisely, the leaf spring assembly 11 is clamped to the front axle 9 by means of a U-bolt clamp arrangement 16 and a spring centre bolt 17.

The spring centre bolt 17 is also shown in Fig. 3, which is a cross-sectional view of the first spring assembly 11 as regarded in the longitudinal direction of the vehicle towards the axle 9. Fig. 3 shows a cross-sectional view of the three parabolic leaf springs 11a, 11b, 11c which are shown together as a single leaf spring assembly 11 in Fig. 2. Furthermore, the spring centre bolt 17 is arranged through the first leaf spring 11a and is anchored securely in the axle 9. According to the embodiment, the three leaf springs 11a, 11b, 11c are configured so that they are maintained separated in a manner wherein the second leaf spring 11b and third leaf spring 11c are separated in a horizontal direction, and the first leaf spring 11a is arranged to be separated from the second and third leaf springs 11b, 11c in a vertical direction. This is accomplished by means of a spacer component 18 which is arranged along the section 15 of the leaf spring assembly 11 (see also Fig. 2). The spacer component 18 is formed by a generally homogenuous material through which the leaf springs 11a, 11b, 11c extend. In this manner, the spacer component 18 will separate the leaf springs 11a, 11d, 11c according to a desired configuration. According to an embodiment, the spacer component 18 is constituted by steel or aluminium and is configured so as to retain the leaf springs 11a, 11b, 11c in their fixed positions.

According to the embodiment, all three leaf springs 11a, 11b, 11c are constituted by parabolic leaf springs. With reference to Figs. 4a and 4b, there is shown a simplified perspective view of the leaf spring assembly 11 in a disassembled and assembled manner, respectively. Fig. 4a shows - as also explained above - that the first leaf spring 11a is separated vertically from the second and third leaf springs 11b, 11c, and that the second and third leaf springs 11b, 11c are separated in a horizontal direction from each other.

Furthermore, the first leaf spring 11a is arranged in a mirrored, i.e. reverse, manner (as regarded with reference to a horizontal plane) as compared to the second and third leaf springs 11b, 11c. This means that the parabolic curve which is defined by the first leaf spring 11a is reversed as compared with the parabolic curves defines by the second and third leaf springs 11b, 11c. In this manner, the wind-up stiffness will be increased.

In summary, the leaf spring assembly 11 comprises at least two, but preferably three leaf springs 11a, 11b, 11c which are arranged, during use in the vehicle 1, with a longitudinal extension which generally coincides with the longitudinal extension of the vehicle. In the area 15 of the assembly 11 which is clamped to the front axle 9, the three leaf springs 11a, 11b, 11c are kept separated in a vertical and horizontal direction as shown in Fig. 3 by means of the spacer component 18.

The leaf spring assembly 11 is attached to the axle 9 by means of a spring clamping unit which can be said to be constituted by the spacer component 18 together with the U-bolt clamp arrangement 16 and the spring centre bolt 17.

Furthermore, as indicated in Fig. 4b (and also as shown in Fig. 2), the front and rear end sections of each leaf spring 11a, 11b, 11c, respectively, are anchored in a common position. More precisely, and with reference to Fig. 2, it is noted that the leaf spring assembly 11 has a front end section 19 which defines a front spring eye 20 which is attached to the front spring attachment 12 via a spring shackle connection 21. Also, the leaf spring assembly 11 has a rear end section 22 which defines a rear spring eye 23 which is attached to the rear spring attachment 13. This means that all three leaf springs 11a, 11b, 11c (see Fig. 4b) are connected to the same common anchoring point in the front spring attachment 12 and the rear spring attachment 13, respectively. As indicated with reference to Fig. 1, the front spring attachment 12 and the rear spring attachment 13 are attached to the chassis of the vehicle.

Each one of the leaf springs 11a, 11b, 11c can be produced with a width which is considerably less that the total width of the leaf spring assembly 11. This reduction in width makes it possible to manufacture the leaf spring assembly 11 with a greatly reduced weight, as compared with prior art assemblies, while still maintaining a required vertical stiffness of the assembly 11. Also, since each leaf spring 11a, 11b, 11c will work side by side and also be mounted to the same connection point in the front and rear end of the assembly 11, the side stiffness will also be maintained. Also, the leaf springs 11a, 11b, 11c according to the embodiment will be used more effectively for vertical, torsional and brake wind-up stiffness.

Generally, the leaf spring assembly may comprise at least one upper leaf spring and at least one lower leaf spring, wherein the upper and lower leaf springs are mounted vertically spaced apart and wherein the upper leaf spring is arranged in a reverse manner, as regarded with reference to a horizontal plane, with respect to the lower leaf spring.

According to an embodiment, the leaf spring assembly 11 as shown in Figs. 2-4 comprises three leaf springs 11a, 11b, 11c of which two leaf springs 11b, 11c are arranged horizontally spaced apart and the third leaf spring 11a is arranged vertically spaced apart from the two remaining leaf springs 11b, 11c. Also, the third leaf spring 11a is furthermore arranged arranged in a reverse manner, as regarded with reference to a horizontal plane, with respect to the remaining leaf springs 11b, 11c.

In addition to advantages of the invention which relate to a weight saving of the complete leaf spring assembly 11, a more effective use of each leaf spring is provided as a result of an increased stiffness and an improved possibility of tuning the leaf spring assembly 11. In particular, internal forces can be introduced between the upper and lower leaf springs by biasing them during assembly of the complete leaf spring assembly, i.e. when the end sections of the leaf springs are mounted to the front spring eye and the rear spring eye, respectively.

As a result, the wind-up stiffness increases by the force distribution between the two lower leaf springs and the upper leaf spring. Furthermore, an increased torsional stiffness (i.e. about a rotational axis defined along the leaf spring assembly) is obtained due to the spring steel being placed further apart and also by letting the upper leaf spring take a torsional load directly in its spring eye. Finally, the typical kinematic behaviour on the upper leaf spring and the lower leaf springs could be tuned so that the position of the so-called "Ross point" (i.e. the rotation centre of a spring) will give a neutral effect on the vertical stiffness or give a progressive characteristic to the vertical stiffness and the wind-up stiffness of the leaf spring assembly.

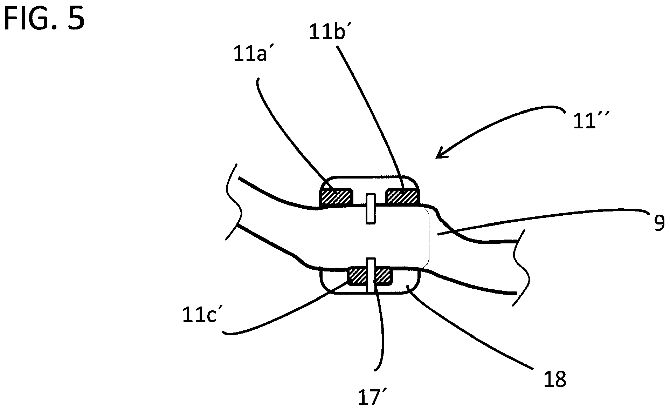

As shown in Fig. 3, the leaf springs 11a, 11b, 11c are arranged so that they all extend along a top side of the axle 9. However, with reference to Fig. 5, there is shown an alternative embodiment in which the leaf spring assembly 11' is disposed in an alternative manner with respect to the axle 9. More precisely, as shown in Fig. 5, two leaf springs 11a' and 11b' extend above the top side of the axle 9 whereas a third leaf spring 11c' extend underneath the bottom side of the axle 9.

As previously described also with reference to Fig. 3, the embodiment according to Fig. 5 is based on the principle that one of the leaf springs, i.e. the third leaf spring 11c', is mounted vertically spaced apart from the first and second leaf springs 11a', 11b', wherein the first and second leaf springs 11a', 11b' are also horizontally spaced apart. To this end, the embodiment shown in Fig. 5 comprises a spacer component 18 which is configured for separating the leaf springs 11a', 11b', 11c) in a vertical or horizontal direction as desired. The embodiment also includes a spring centre bolt 17', which in contrast to the embodiment in Fig. 3 is accessed from underneath the axle 9.

Also, the lower leaf spring 11c' is arranged in a reverse manner, as regarded with reference to a horizontal plane, with respect to the upper leaf springs 11b', 11c. However, in contrast to the embodiment shown in Fig. 3, the leaf spring assembly 11" according to Fig. 5 is based on the principle that the first and second leaf springs 11a', 11b' are positioned across a top side of the axle 9 and the third leaf spring 11c' extends underneath a bottom side of the axle 9. Also, the third leaf spring 11c' is arranged in a reverse manner, as regarded with reference to a horizontal plane, with respect to the first and second leaf springs 11a', 11b'.

The two leaf springs 11a', 11b' which are mounted above the axle 9 will operate together with the third leaf spring 11c' as reaction rods for providing an the increased wind-up stiffness in the same way as the embodiment shown in Fig. 3.

The invention is not limited to the embodiments described above, but can be varied within the scope of the subsequent claims. For example, the invention can be used for any type of vehicle having a need for suspension of wheel axles in relation to a vehicle frame. Also, various numbers and configurations of leaf springs can be used within the scope of the claims.

## Claims

1. Vehicle suspension arrangement (10) comprising a leaf spring assembly (11) with at least two leaf springs (11a; 11b; 11c) which are arranged, during use in a vehicle, with a longitudinal extension generally coinciding with the longitudinal extension of said vehicle; said suspension arrangement (10) comprising a spring clamping unit (16, 17, 18) connecting said leaf springs (11a; 11 b; 11 c) to an axle (9) in said vehicle; and wherein each of said leaf springs (11a; 11b; 11c) comprises front (19) and rear (22) end sections which are configured to be fastened in a vehicle chassis; **characterized in that** said spring clamping unit (16, 17, 18) comprises a spacer component (18) which is configured for separating said leaf springs (11a; 11b; 11c) in a vertical or horizontal direction, wherein the vehicle suspension arrangement further comprises at least one upper leaf spring (11a) and at least one lower leaf spring (11b; 11c), said upper and lower leaf springs being mounted vertically spaced apart, wherein said upper leaf spring (11a) is arranged in a reverse manner, as regarded with reference to a horizontal plane, with respect to said lower leaf spring (11b; 11c), wherein the at least one upper leaf spring (11a) and at least one lower leaf spring (11b; 11c) are connected to the same common anchoring point in the front end section (19) and the rear end section (22), respectively.

2. Vehicle suspension arrangement (10) according to claim 1, **characterized in that** the said spacer component (18) is constituted by a generally homogenuous material through which said leaf springs (11a; 11b; 11c) extend whereby said spacer component (18) separate said leaf springs (11a; 11 b; 11 c).

3. Vehicle suspension arrangement (10) according to claim 1 or 2, **characterized in that** each leaf spring (11a; 11b; 11c) comprises a rear spring eye (23) and a front spring eye (19) for fastening said leaf spring (11a; 11b; 11c) in said chassis, whereby the rear spring eyes (23) are fastened in a common point and the front spring eyes (20) are fastened in a further common point.

4. Vehicle suspension arrangement (10) according to any one of claims 1-3, **characterized in that** it comprises three leaf springs (11a, 11 b, 11c) of which two leaf springs (11b, 11c) are arranged horizontally spaced apart and wherein the third leaf spring (11a) is arranged vertically spaced apart from the two remaining leaf springs (11b, 11c), said third leaf spring (11a) furthermore being arranged in a reverse manner, as regarded with reference to a horizontal plane, with respect to the remaining leaf springs (11b, 11 c).

5. Vehicle suspension arrangement (10) according to any one of the preceding claims, **characterized in that** all leaf springs (11a, 11b, 11c) extend along a top side of said axle (9).

6. Vehicle suspension arrangement (10) according to any one of claims 1-4, **characterized in that** at least one leaf spring extends across a top side of said axle (9) and at least one leaf spring extend underneath a bottom side of said axle (9).

7. Vehicle suspension arrangement (10) according to any one of the preceding claims, **characterized in that** said leaf springs (11a; 11b; 11c) are constituted by parabolic springs.

8. Vehicle comprising a suspension arrangement (10) according to any one of the preceding claims.

## Patentansprüche

1. Fahrzeugaufhängungsanordnung (10) mit einer Blattfederanordnung (11) mit mindestens zwei Blattfedern (11a; 11b; 11c), die während des Einsatzes in einem Fahrzeug mit einer Längserstreckung angeordnet sind, die im allgemeinen mit der Längserstreckung des Fahrzeugs zusammenfällt; wobei die Aufhängungsanordnung (10) eine Federklemmeinheit (16, 17, 18) umfasst, die die Blattfedern (11a; 11b; 11c) mit einer Achse (9) im Fahrzeug verbindet; und wobei jede der Blattfedern (11a; 11b; 11c) vordere (19) und hintere (22) Endabschnitte aufweist, die zur Befestigung in einem Fahrzeugchassis konfiguriert sind; **dadurch gekennzeichnet, dass** die Federklemmeinheit (16, 17, 18) ein Abstandselement (18) umfasst, das zur Trennung der Blattfedern (11a; 11b; 11c) in vertikaler oder horizontaler Richtung konfiguriert ist, wobei die Fahrzeugaufhängungsanordnung ferner mindestens eine obere Blattfeder (11a) und mindestens eine untere Blattfeder (11b; 11c) umfasst, wobei die oberen und unteren Blattfedern vertikal beabstandet montiert sind, wobei die obere Blattfeder (11a) in Bezug auf eine horizontale Ebene, gegenüber der unteren Blattfeder (11b; 11c) umgekehrt angeordnet ist, wobei die mindestens eine obere Blattfeder (11a) und die mindestens eine untere Blattfeder (11b; 11c) im vorderen Endabschnitt (19) bzw. im hinteren Endabschnitt (22) mit demselben gemeinsamen Verankerungspunkt verbunden sind.

2. Fahrzeugaufhängungsanordnung (10) nach Anspruch 1, **dadurch gekennzeichnet, dass** das Abstandselement (18) aus einem im allgemeinen homogenen Material besteht, durch das sich die Blattfedern (11a; 11b; 11c) erstrecken, wodurch das Abstandselement (18) die Blattfedern (11a; 11b; 11c) trennt.

3. Fahrzeugaufhängungsanordnung (10) nach Anspruch 1 oder 2, **dadurch gekennzeichnet, dass** jede Blattfeder (11a; 11b; 11c) eine hintere Federöse (23) und eine vordere Federöse (19) zur Befestigung der Blattfeder (11a; 11b; 11c) am Chassis umfasst, wobei die hinteren Federösen (23) an einem gemeinsamen Punkt befestigt sind und die vorderen Federösen (20) in einem weiteren gemeinsamen Punkt befestigt sind.

4. Fahrzeugaufhängungsanordnung (10) nach einem der Ansprüche 1 - 3, **dadurch gekennzeichnet, dass** sie drei Blattfedern (11a, 11b, 11c) umfasst, von denen zwei Blattfedern (11b, 11c) horizontal beabstandet angeordnet sind, und wobei die dritte Blattfeder (11a) vertikal beabstandet zu den beiden übrigen Blattfedern (11b, 11c) angeordnet ist, und die dritte Blattfeder (11a) ferner in Bezug auf eine horizontale Ebene bezüglich der übrigen Blattfedern (11b, 11c) umgekehrt angeordnet ist.

5. Fahrzeugaufhängungsanordnung (10) nach einem der vorhergehenden Ansprüche, **dadurch gekennzeichnet, dass** sich alle Blattfedern (11a, 11b, 11c) entlang einer Oberseite der Achse (9) erstrecken.

6. Fahrzeugaufhängungsanordnung (10) nach einem der vorhergehenden Ansprüche 1 - 4, **dadurch gekennzeichnet, dass** sich mindestens eine Blattfeder über eine Oberseite der Achse (9) erstreckt und sich mindestens eine Blattfeder unter eine Unterseite der Achse (9) erstreckt.

7. Fahrzeugaufhängungsanordnung (10) nach einem der vorhergehenden Ansprüche, **dadurch gekennzeichnet, dass** Blattfedern (11a; 11b; 11c) aus parabolischen Federn bestehen.

8. Fahrzeug mit einer Aufhängungsanordnung (10) nach einem der vorhergehenden Ansprüche.

## Revendications

1. Ensemble de suspension de véhicule (10) comprenant un ensemble de ressorts à lames (11) avec au moins deux ressorts à lames (11a ; 11b ; 11c) disposés, pendant l'utilisation du véhicule, avec une extension longitudinale coïncidant généralement avec l'extension longitudinale dudit véhicule ; ledit ensemble de suspension (10) comprenant une unité de serrage de ressorts (16, 17, 18) reliant lesdits ressorts à lames (11a ; 11b ; 11c) à un essieu (9) dans ledit véhicule ; et dans lequel chacun desdits ressorts à lames (11a ; 11b ; 11c) comprend des sections terminales avant (19) et arrière (22), lesquelles sont configurées pour être fixées dans un châssis de véhicule ; **caractérisé en ce que** ladite unité de serrage de ressorts (16, 17, 18) comprend un élément d'espacement (18) configuré pour séparer lesdits ressorts à lames (11a ; 11b ; 11c) dans une direction verticale ou horizontale, l'ensemble de suspension de véhicule comprenant en outre au moins un ressort à lames supérieur (11a) et au moins un ressort à lames inférieur (11b ; 11c), lesdits ressorts à lames supérieur et inférieur étant montés de façon verticalement espacée, ledit ressort à lames supérieur (11a) étant disposé de manière inversée en référence à un plan horizontal, par rapport audit ressort à lames inférieur (11b ; 11c), l'au moins un ressort à lames supérieur (11a) et l'au moins un ressort à lames inférieur (11b ; 11c) étant reliés au même point d'ancrage commun dans la section terminale avant (19) et la section terminale arrière (22), respectivement.

2. Ensemble de suspension de véhicule (10) selon la revendication 1, **caractérisé en ce que** ledit élément d'espacement (18) est constitué d'un matériau généralement homogène à travers lequel s'étendent lesdits ressorts à lames (11a ; 11b ; 11c), moyennant quoi ledit élément d'espacement (18) sépare lesdits ressorts à lames (11a ; 11b ; 11c).

3. Ensemble de suspension de véhicule (10) selon la revendication 1 ou 2, **caractérisé en ce que** chaque ressort à lames (11a ; 11b ; 11c) comprend un œil de ressort arrière (23) et un œil de ressort avant (19) pour la fixation dudit ressort à lames (11a ; 11b ; 11c) dans ledit châssis, moyennant quoi les yeux de ressort arrière (23) sont fixés en un point commun et les yeux de ressort avant (20) sont fixés en un autre point commun.

4. Ensemble de suspension de véhicule (10) selon l'une quelconque des revendications 1 à 3, **caractérisé en ce que** celui-ci comprend trois ressorts à lames (11a ; 11b ; 11c), parmi lesquels deux ressorts à lames (11b ; 11c) sont disposés de façon espacée horizontalement, et dans lequel le troisième ressort à lames (11a) est disposé de façon espacée verticalement par rapport aux deux autres ressorts à lames (11b ; 11c), ledit troisième ressort à lames (11a) étant en outre disposé de manière inversée, en référence à un plan horizontal par rapport aux autres ressorts à lames (11b ; 11c).

5. Ensemble de suspension de véhicule (10) selon l'une quelconque des revendications précédentes, **caractérisé en ce que** tous les ressorts à lames (11a ; 11b ; 11c) s'étendent le long d'un côté supérieur dudit essieu (9) .

6. Ensemble de suspension de véhicule (10) selon l'une quelconque des revendications 1 à 4, **caractérisé en ce qu'**au moins un ressort à lames s'étend à travers un côté supérieur dudit essieu (9) et au moins un ressort à lames s'étend sous un côté inférieur dudit essieu (9) .

7. Ensemble de suspension de véhicule (10) selon l'une quelconque des revendications précédentes, **caractérisé en ce que** lesdits ressorts à lames (11a ; 11b ; 11c) sont constitués de ressorts paraboliques.

8. Véhicule comprenant un ensemble de suspension (10) selon l'une quelconque des revendications précédentes.
